# EUROPÄISCHE PATENTANMELDUNG

(11) **EP 4 328 051 A1**
(43) Veröffentlichungstag der Anmeldung: **28.02.2024**
(21) Anmeldenummer: 23188244.0
(22) Anmeldetag: 27.07.2023
(51) Int. Cl.: B60D 1/06, B60D 1/58

(54) **KUGELKUPPLUNGSANORDNUNG FÜR EINEN LANDWIRTSCHAFTLICHEN TRAKTOR**

(30) Priorität: 23.08.2022 DE 102022121264
(71) Anmelder: Deere & Company, Moline, IL 61265 (US)
(72) Erfinder: Heitlinger, Martin, Mannheim (DE)
(74) Vertreter: Dehnhardt, Florian Christopher

(57) **Zusammenfassung**

Kugelkupplungsanordnung (10) für einen landwirtschaftlichen Traktor umfassend eine Kupplungsbasis (12) mit einer daran angebrachten Kupplungskugel (14) zur Aufnahme einer dazu komplementären Kupplungspfanne (16) und mit einem an der Kupplungsbasis (12) angeordneten Kupplungsgehäuse (18), wobei an dem Kupplungsgehäuse (18) ein Niederhalter (30) derart angelenkt ist, dass dieser zwischen einer die Kupplungskugel (14) verriegelnden Stellung (62) und einer diese freigebenden Stellung (50) verschwenkbar ist. Hierbei ist an dem Kupplungsgehäuse (18) ein Verschlusselement (68) angebracht, das sich zur Arretierung des Niederhalters (30) in seiner verriegelnden Stellung (62) mit einem an einer Außenkontur (70) des Niederhalters (30) ausgebildeten flächigen Anschlagbereich (72) in Anlage bringen lässt.

## Beschreibung

Die Erfindung betrifft eine Kugelkupplungsanordnung für einen landwirtschaftlichen Traktor, umfassend eine Kupplungsbasis mit einer daran angebrachten Kupplungskugel zur Aufnahme einer dazu komplementären Kupplungspfanne und mit einem an der Kupplungsbasis angeordneten Kupplungsgehäuse, wobei an dem Kupplungsgehäuse ein Niederhalter derart angelenkt ist, dass dieser zwischen einer die Kupplungskugel verriegelnden Stellung und einer diese freigebenden Stellung verschwenkbar ist.

Derartige Kugelkupplungsanordnungen zur Verwendung mit landwirtschaftlichen Traktoren sind in den unterschiedlichsten Ausführungen bekannt, wobei diese häufig einen als L-förmiges Stahlschmiedeteil ausgebildeten Niederhalter umfassen, der im Bereich eines ersten Endes zwischen zwei gegenüberliegenden Wangen am Kupplungsgehäuse drehbar gelagert ist und im Bereich eines zweiten Endes ein der Kupplungskugel zugewandtes Druckstück aufweist, mittels dessen der Bewegungsspielraum einer auf die Kupplungskugel aufgesetzten Kupplungspfanne durch Verbringen des Niederhalters in eine verriegelnde Stellung soweit einschränkbar ist, dass ein unbeabsichtigtes Lösen der Kupplungsverbindung durch Abspringen der Kupplungspfanne von der Kupplungskugel ausgeschlossen ist. Die Kupplungspfanne ist hierbei typischerweise Bestandteil einer Anhängedeichsel eines von dem landwirtschaftlichen Traktor zu ziehenden Arbeitsgeräts, zum Beispiel eines Ladeanhängers oder dergleichen.

Zur Sicherung der Kupplungsverbindung ist in dem Niederhalter quer zu dessen Schwenkrichtung eine Arretierungsöffnung ausgebildet, die mit korrespondierenden Arretierungsöffnungen in den beiden Wangen des Kupplungsgehäuses fluchtet, sobald sich der Niederhalter in seiner die Kupplungskugel verriegelnden Stellung befindet. Durch die Arretierungsöffnungen lässt sich ein Sicherungsbolzen schieben, sodass der Niederhalter in dieser Stellung festlegbar ist.

Der zur besseren Handhabung mit einem Handgriff versehene Sicherungsbolzen kann nach Lösen eines Sicherungselements entweder vollständig entfernbar oder aber in einen am Kupplungsgehäuse fest angebrachten Betätigungsmechanismus integriert sein. Gemäß einer in 6R-Traktoren von John Deere verwendeten Bauform besteht letzterer aus einer an einer der Wangen des Kupplungsgehäuses hervorspringenden Hülse, in der der Sicherungsbolzen mittels eines Handgriffs entlang einer in einer Hülsenwandung ausgebildeten Verriegelungskulisse verschiebbar geführt ist, wobei der Handgriff ein federvorgespanntes Griffstück aufweist, das mit einem stirnseitigen Endstück in eine entlang der Verriegelungskulisse vorgesehene Ausnehmung einrastet, wenn der Sicherungsbolzen eine endgültige Position innerhalb der an den Wangen sowie dem Niederhalter vorgesehenen Arretierungsöffnungen einnimmt.

Die vorbeschriebenen Anordnungen erlauben eine sichere Arretierung des Niederhalters, in der Praxis hat sich jedoch herausgestellt, dass diese aufgrund ihrer Bauweise vergleichsweise verschmutzungsanfällig sind, sodass die Handhabung des Sicherungsbolzens gerade unter widrigen Umgebungsbedingungen für einen Bediener merklich erschwert sein kann.

Angesichts dessen ist es Aufgabe der vorliegenden Erfindung, eine Kugelkupplungsanordnung der eingangs genannten Art mit einer gegenüber Verschmutzungen unempfindlichen Anordnung zur Arretierung des Niederhalters in seiner die Kupplungskugel verriegelnden Stellung anzugeben.

Diese Aufgabe wird durch eine Kugelkupplungsanordnung für einen landwirtschaftlichen Traktor mit den Merkmalen des Patentanspruchs 1 gelöst.

Die Kugelkupplungsanordnung für einen landwirtschaftlichen Traktor umfasst eine Kupplungsbasis mit einer daran angebrachten Kupplungskugel zur Aufnahme einer dazu komplementären Kupplungspfanne und mit einem an der Kupplungsbasis angeordneten Kupplungsgehäuse, wobei an dem Kupplungsgehäuse ein Niederhalter derart angelenkt ist, dass dieser zwischen einer die Kupplungskugel verriegelnden Stellung und einer diese freigebenden Stellung verschwenkbar ist. Hierbei ist an dem Kupplungsgehäuse ein Verschlusselement angebracht, das sich zur Arretierung des Niederhalters in seiner verriegelnden Stellung mit einem an einer Außenkontur des Niederhalters ausgebildeten flächigen Anschlagbereich in Anlage bringen lässt. In der solchermaßen gebildeten Arretierungsposition wird eine Schwenkbewegung des Niederhalters in Richtung der die Kupplungskugel freigebenden Stellung durch das Verschlusselement vollständig blockiert.

Aufgrund seiner flächigen Ausbildung weist der entlang der Außenkontur des Niederhalters vorgesehene Anschlagbereich eine vergleichsweise geringe Neigung für die Anhaftung von Verschmutzungen auf. Auch lässt sich dieser von außen mit der Hand oder unter Zuhilfenahme einer Bürste oder eines Hochdruckreinigers problemlos säubern, sodass stets eine uneingeschränkte Funktion des Verschlusselements gewährleistet werden kann.

Das Kupplungsgehäuse kann einstückiger Bestandteil der Kupplungsbasis sein. Alternativ ist es aber auch möglich, dass dieses als separates Bauteil ausgebildet und mittels mehrerer Schrauben an der Kupplungsbasis lösbar befestigt ist. Die Kupplungsbasis umfasst in der Regel eine Trägerplatte, auf deren Oberseite sich das Kupplungsgehäuse befindet. An der Trägerplatte verlaufen linke und rechte Kufen, die sich in damit korrespondierende Führungsschienen einer universellen Kupplungsschnittstelle im Heckbereich des landwirtschaftlichen Traktors einschieben und darin verriegeln lassen.

Vorteilhafte Weiterbildungen der erfindungsgemäßen Kugelkupplungsanordnung gehen aus den Unteransprüchen hervor.

Vorzugsweise handelt es sich bei dem Verschlusselement um einen in der Arretierungsposition senkrecht zur Schwenkrichtung des Niederhalters am Kupplungsgehäuse verlaufenden Querriegel. Der Querriegel kann aus Flach- bzw. Plattenmaterial einer geeigneten Stahllegierung hergestellt sein, sodass dieser eine ebene Gegenfläche zur Anlage des am Niederhalter vorgesehenen flächigen Anschlagbereichs bildet. Die Krafteinleitung in den Querriegel seitens des Niederhalters erfolgt in diesem Fall ausschließlich in Schwenkrichtung, auf das Kupplungsgehäuse werden somit keine (undefinierten) Querkräfte ausgeübt. Dies vereinfacht dessen konstruktive Auslegung maßgeblich.

Des Weiteren ist es möglich, dass der Querriegel derart an dem Kupplungsgehäuse angelenkt ist, dass sich dieser von Hand in eine die Arretierung des Niederhalters lösende Position verschwenken lässt. Umfasst die Kugelkupplungsanordnung wie eingangs beschrieben einen als L-förmiges Stahlschmiedeteil ausgebildeten Niederhalter, der im Bereich eines ersten Endes zwischen zwei gegenüberliegenden Wangen am Kupplungsgehäuse drehbar gelagert ist und im Bereich eines zweiten Endes ein der Kupplungskugel zugewandtes Druckstück aufweist, so kann sich der Querriegel von der einen zur anderen Wange des Kupplungsgehäuses erstrecken. Hierbei kann eine schlitzförmige Ausnehmung an einer der beiden Wangen einen Anlenkbereich des Querriegels formschlüssig aufnehmen, wobei der Anlenkbereich innerhalb der schlitzförmigen Ausnehmung mittels eines Gelenkbolzens drehbar gelagert ist. Auch können die beiden Wangen auf einer dem Querriegel abgewandten Seite über einen Brückenabschnitt miteinander in Verbindung stehen, wobei an dem Brückenabschnitt zusätzlich eine den Querriegel stützende Führungsfläche ausgebildet sein kann. Hierdurch wird nicht nur der Querriegel hinsichtlich der seitens des Niederhalters einwirkenden Kräfte entlastet, auch lassen sich diese über die stützende Führungsfläche besonders gleichmäßig in das Kupplungsgehäuse einleiten.

Zusätzlich kann der flächige Anschlagbereich radial zu einer der Anlenkung des Niederhalters am Kupplergehäuse dienenden Drehstelle ausgerichtet sein. Anschaulich gesprochen fluchtet in diesem Fall die durch den Anschlagbereich gebildete Fläche mit einer durch die Drehstelle hindurchtretenden gedachten Radialverlängerung. Dies erlaubt ein Öffnen des Querriegels durch Herausschwenken aus seiner Arretierungsposition grundsätzlich auch dann, wenn dieser seitens des Niederhalters unter Last steht.

Zum Zwecke einer bequemen Bedienung des Querriegels von Hand kann vorgesehen sein, dass der Querriegel an einem dem Anlenkbereich gegenüberliegenden Freiende einen Griffbereich aufweist. Der Griffbereich kann als über die angrenzende Wange des Kupplungsgehäuses hinausragender Riegelabschnitt ausgeformt sein. Zusätzlich ist es denkbar, dass an dem Querriegel ein sich über den Anlenkbereich entgegengesetzt zum Freiende erstreckender ambossartiger Vorsprung in Form eines weiteren Riegelabschnitts vorgesehen ist. Durch Einwirken mittels eines Hammers oder eines anderen Schlagwerkzeugs auf den ambossartigen Vorsprung lässt sich ein Öffnen des Querriegels durch Herausschwenken aus seiner Arretierungsposition unterstützen.

Um ein unbeabsichtigtes Lösen der Kupplungsverbindung auszuschließen, kann der Querriegel in seiner Arretierungsposition mittels eines von Hand betätigbaren Sicherungsmechanismus festlegbar sein.

Dabei besteht die Möglichkeit, dass der Sicherungsmechanismus einen federvorgespannten Sicherungsbolzen aufweist, dessen freies Ende in der Arretierungsposition des Querriegels in eine in diesem ausgebildete Ausnehmung eingreift. Die Ausnehmung verläuft bevorzugt stirnseitig im Bereich des Freiendes des verschwenkbaren Querriegels und weist beispielsweise die Gestalt eines an den Außendurchmesser des Sicherungsbolzens angepassten Eingriffsschlitzes auf. Der Sicherungsbolzen kann in diesem Fall mitsamt einer zum Aufbau der Federvorspannung vorgesehenen Druckfeder in einer an das Freiende des Querriegels angrenzenden Wange des Kupplungsgehäuses gelagert sein, wobei sich ein Befestigungsende des Sicherungsbolzens durch die Wange hindurcherstrecken und einen der manuellen Betätigung dienenden Handknauf tragen kann, der zugleich ein Gegenlager zur Begrenzung einer Ausfederbewegung des federvorgespannten Sicherungsbolzens bildet.

Hierbei kann die Ausnehmung entlang eines Eintrittsbereichs derart konturiert sein, dass in Zusammenwirken mit dem freien Ende des federvorgespannten Sicherungsbolzens ein Schnappverschluss gebildet ist. Genauer gesagt kann der Eintrittsbereich eine rampenförmige Kontur aufweisen, die den Sicherungsbolzen beim Schließen des verschwenkbaren Querriegels in Richtung seiner Arretierungsposition entgegen der Federvorspannung wegdrängt, um bei Erreichen einer endgültigen Position in den sich daran anschließenden Eingriffsschlitz einzurasten.

Der am Querriegel vorgesehene Eingriffsschlitz, der Anlenkbereich, die beiden Riegelabschnitte sowie die rampenförmige Kontur können bei Verwendung von aus einer geeigneten Stahllegierung bestehenden Flach- bzw. Plattenmaterial in einem Arbeitsgang durch Laserschneiden hergestellt werden.

Des Weiteren ist es möglich, dass der Niederhalter mittels eines Federelements in Richtung der die Kupplungskugel freigebenden Stellung vorgespannt ist. Bei dem Federelement kann es sich um eine Schenkelfeder handeln, die sich einenends am Kupplungsgehäuse und andernends an einer mit dem Niederhalter drehfest verbundenen Gelenkwelle abstützt. Diese bildet zugleich die drehbare Lagerung des Niederhalters am Kupplungsgehäuse. Die mittels der Schenkelfeder auf die Gelenkwelle ausgeübte Federvorspannung wird derart bemessen, dass der Niederhalter beim Lösen der Arretierung bevorzugt von selbst seine die Kupplungskugel freigebende Stellung einnimmt.

Die erfindungsgemäße Kugelkupplungsanordnung für einen landwirtschaftlichen Traktor wird im Folgenden anhand der Zeichnungen näher beschrieben. Dabei beziehen sich identische Bezugszeichen auf übereinstimmende oder bezüglich ihrer Funktion vergleichbare Komponenten. Es zeigen:
- Fig. 1: ein perspektivisch dargestelltes Ausführungsbeispiel der erfindungsgemäßen Kugelkupplungsanordnung in verriegeltem Zustand,
- Fig. 2: das in Fig. 1 wiedergegebene Ausführungsbeispiel der erfindungsgemäßen Kugelkupplungsanordnung in entriegeltem Zustand,
- Fig. 3: ein von der Kugelkupplungsanordnung gemäß Fig. 1 bzw. 2 umfasstes Kupplungsgehäuse,
- Fig. 4: eine von einer Kupplungsbasis umfasste Trägerplatte zur Anbringung des Kupplungsgehäuses aus Fig. 3,
- Fig. 5: ein von der Kugelkupplungsanordnung gemäß Fig. 1 umfasster Niederhalter,
- Fig. 6: ein von der Kugelkupplungsanordnung gemäß Fig. 1 umfasstes Verschlusselement in Gestalt eines Querriegels,
- Fig. 7: ein im Schnitt wiedergegebener Sicherungsmechanismus zur Festlegung des Querriegels in einer eine Schwenkbewegung des Niederhalters am Kupplungsgehäuse blockierenden Arretierungsposition, und
- Fig. 8: ein von dem Sicherungsmechanismus gemäß Fig. 7 umfasster Schnappverschluss.

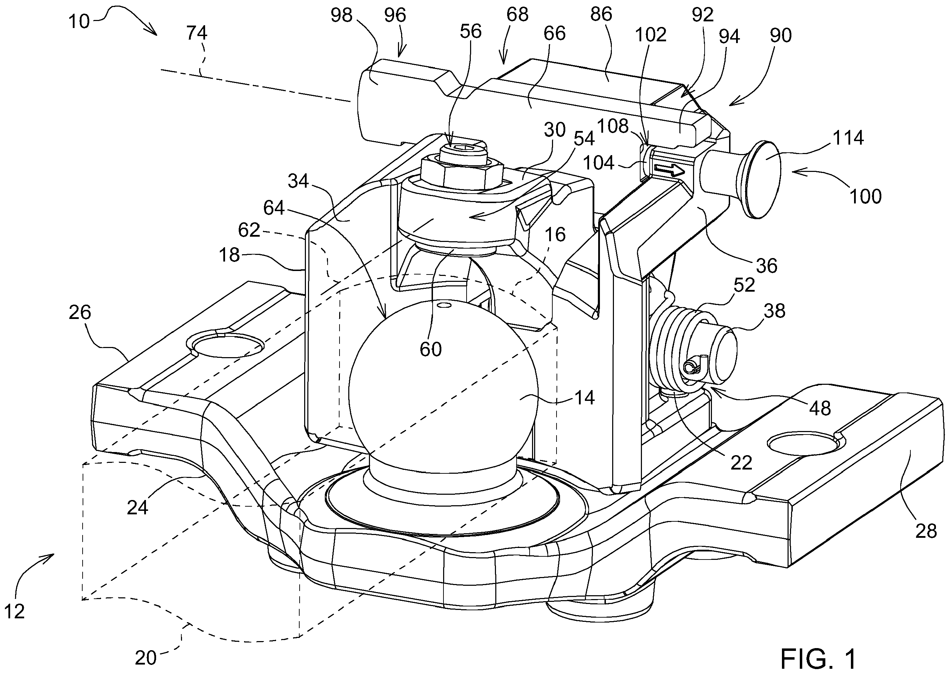

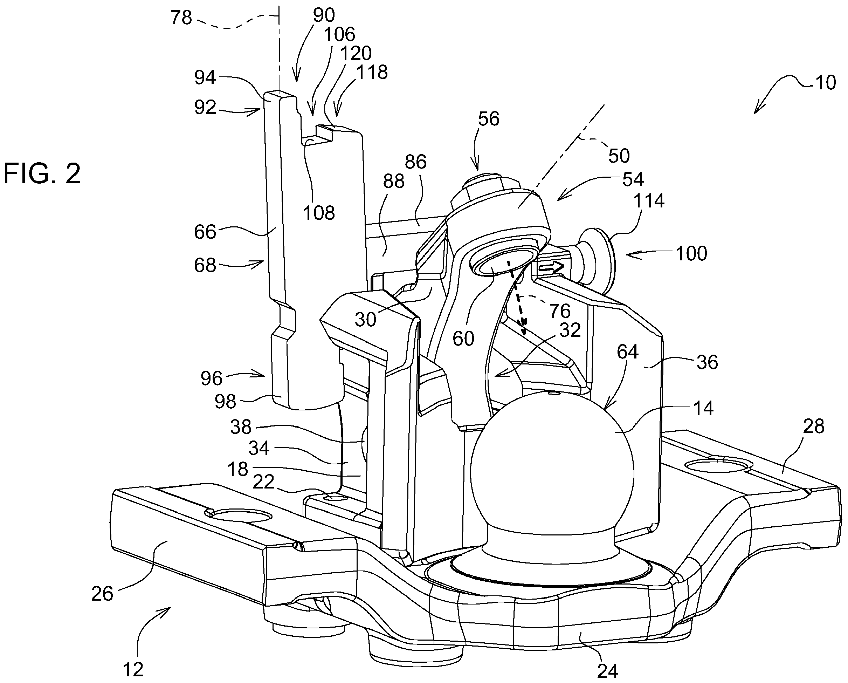

Fig. 1 und 2 geben ein in verschiedenen Perspektiven dargestelltes Ausführungsbeispiel der erfindungsgemäßen Kugelkupplungsanordnung für einen (nicht gezeigten) landwirtschaftlichen Traktor wieder.

Die Kugelkupplungsanordnung 10 umfasst eine Kupplungsbasis 12 mit einer daran angebrachten Kupplungskugel 14 zur Aufnahme einer dazu komplementären Kupplungspfanne 16 und mit einem an der Kupplungsbasis 12 angeordneten Kupplungsgehäuse 18. Die Kupplungspfanne 16 ist lediglich strichliniert angedeutet und ist typischerweise Bestandteil einer Anhängedeichsel 20 eines von dem landwirtschaftlichen Traktor zu ziehenden Arbeitsgeräts, zum Beispiel eines Ladeanhängers oder dergleichen.

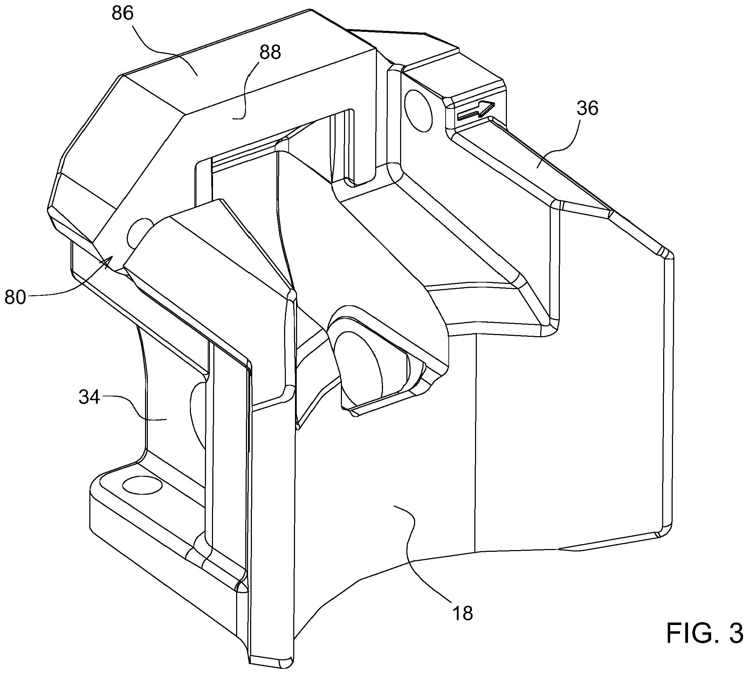

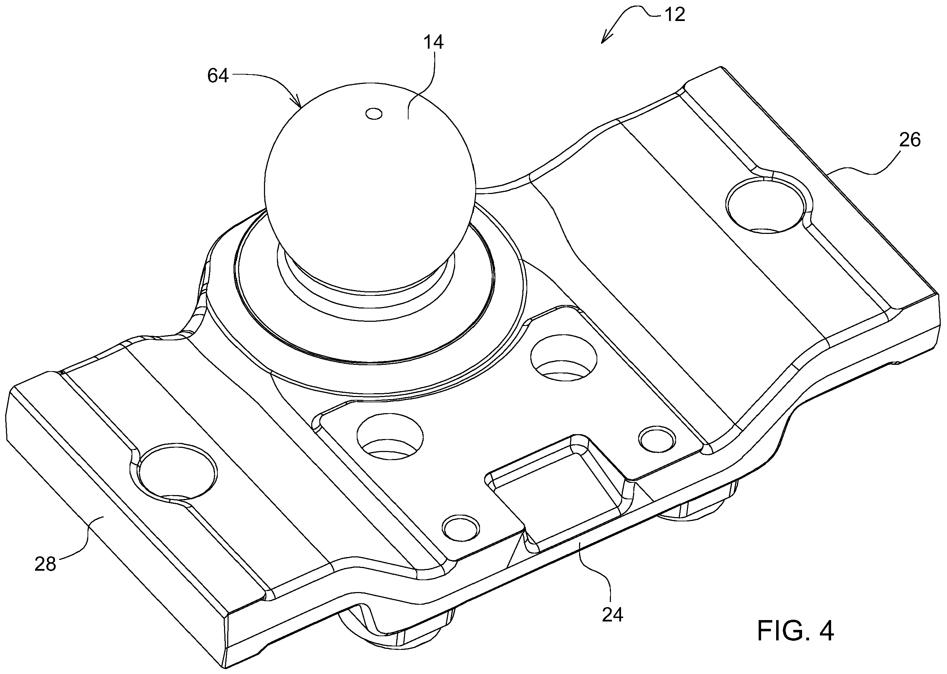

Entsprechend Fig. 3 ist das Kupplungsgehäuse 18 als separates Bauteil ausgebildet und mittels mehrerer Schrauben 22 an der Kupplungsbasis 12 lösbar befestigt (in Fig. 1 bzw. 2 angedeutet). Die Kupplungsbasis 12 umfasst eine in Fig. 4 gezeigte Trägerplatte 24, auf deren Oberseite sich das Kupplungsgehäuse 18 in montiertem Zustand befindet. An der Trägerplatte 24 verlaufen linke und rechte Kufen 26, 28, die sich in damit korrespondierende Führungsschienen einer universellen Kupplungsschnittstelle im Heckbereich des landwirtschaftlichen Traktors einschieben und darin verriegeln lassen (nicht gezeigt). Sowohl das Kupplungsgehäuse 18 wie auch die Trägerplatte 24 sind hierbei als CNC-bearbeitete Stahlgussteile hergestellt, wobei die Kupplungskugel 14 mit dem Trägerteil 24 verschraubt ist, um einen verschleißbedingten Austausch zu ermöglichen.

Es sei an dieser Stelle angemerkt, dass das Kupplungsgehäuse 18 abweichend von der vorstehend beschriebenen zweiteiligen Ausführung grundsätzlich auch einstückiger Bestandteil der Kupplungsbasis 12 bzw. der von dieser umfassten Trägerplatte 24 sein kann.

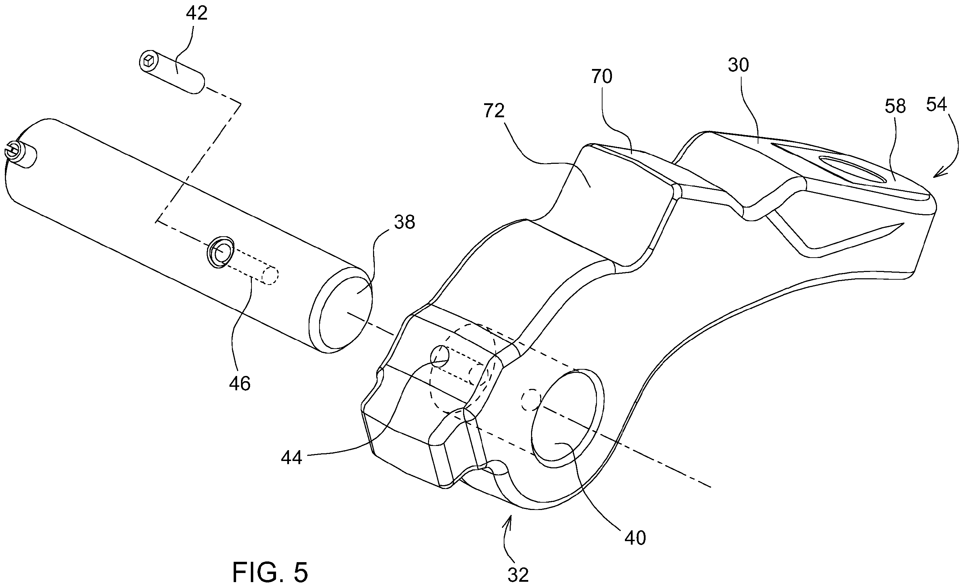

Des Weiteren ist ein als L-förmiges Stahlschmiedeteil ausgebildeter Niederhalter 30 vorgesehen, der in Fig. 5 im Detail abgebildet ist. Ausgehend von der Darstellung in Fig. 2 ist der Niederhalter 30 im Bereich eines ersten Endes 32 zwischen zwei gegenüberliegenden linken und rechten Wangen 34, 36 am Kupplungsgehäuse 18 mittels einer Gelenkwelle 38 drehbar gelagert. Die Gelenkwelle 38 erstreckt sich durch eine in dem ersten Ende 32 des Niederhalters 30 vorgesehene Aufnahmeöffnung 40, wobei diese innerhalb der Aufnahmeöffnung 40 mittels eines Querzapfens 42 drehfest montiert ist. Der Querzapfen 42 verläuft hierbei durch eine in dem Niederhalter 30 seitlich vorgesehene Bohrung 44 bis in eine damit fluchtende Querbohrung 46 in der Gelenkwelle 38.

Der Niederhalter 30 ist mittels eines Federelements 48 in Richtung einer die Kupplungskugel 14 freigebenden Stellung 50 vorgespannt. Bei dem Federelement 48 handelt es sich um eine Schenkelfeder 52, die sich einenends am Kupplungsgehäuse 18 und andernends an der mit dem Niederhalter 30 drehfest verbundenen Gelenkwelle 38 abstützt. Die mittels der Schenkelfeder 52 auf die Gelenkwelle 38 ausgeübte Federvorspannung ist derart bemessen, dass der Niederhalter 30 beim Lösen der Arretierung von selbst seine die Kupplungskugel 14 freigebende Stellung 50 einnimmt.

Im Bereich eines zweiten Endes 54 weist der Niederhalter 30 ein der Kupplungskugel 14 zugewandtes Druckstück 56 in Gestalt eines in einem Befestigungsauge 58 (siehe Fig. 5) des Niederhalters 30 verschraubten Stempels 60 auf. Mittels des Stempels 60 ist der Bewegungsspielraum der Kupplungspfanne 16 durch Verbringen des Niederhalters 30 in eine verriegelnde Stellung 62 soweit einschränkbar, dass ein unbeabsichtigtes Lösen der Kupplungsverbindung durch Abspringen der Kupplungspfanne 16 von der Kupplungskugel 14 ausgeschlossen ist. Die der Kupplungskugel 14 zugewandte Seite des Stempels 60 verläuft in einem definierten Abstand zur Kugeloberfläche 64. Der solcherma-ßen gebildete Freiraum ist so gewählt, dass die Kugelpfanne 16 in der Lage ist, fahrbedingten Schwenkbewegungen der Anhängedeichsel 20 ungehindert zu folgen.

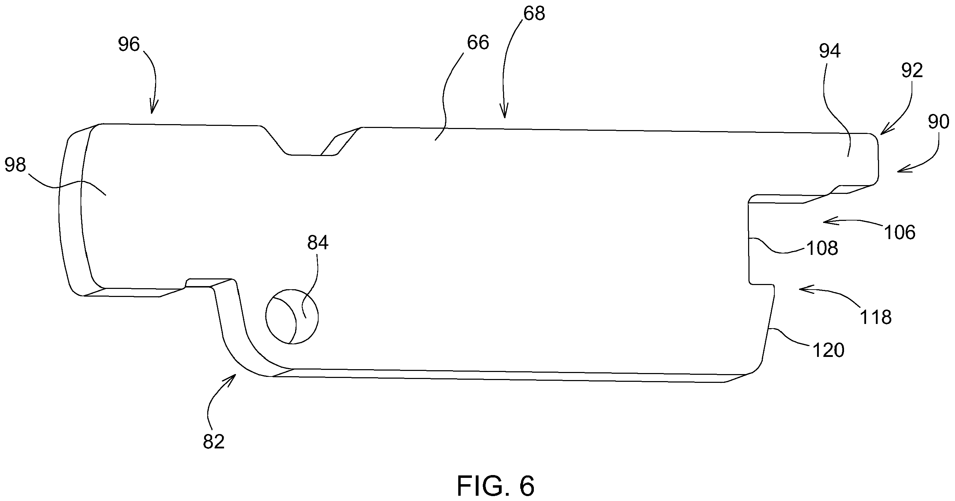

Allgemein gesprochen ist der Niederhalter 30 an dem Kupplungsgehäuse 18 derart angelenkt, dass dieser zwischen einer die Kupplungskugel 14 verriegelnden Stellung 62 (verriegelter Zustand gemäß Fig. 1) und einer diese freigebenden Stellung 50 (entriegelter Zustand gemäß Fig. 2) verschwenkbar ist. Weiterhin ist an dem Kupplungsgehäuse 18 ein als Querriegel 66 ausgebildetes Verschlusselement 68 angebracht, das sich zur Arretierung des Niederhalters 30 in seiner verriegelnden Stellung 62 entsprechend Fig. 1 mit einem an einer Außenkontur 70 des Niederhalters 30 ausgebildeten flächigen Anschlagbereich 72 (siehe Fig. 5) in Anlage bringen lässt. Der flächige Anschlagbereich 72 ist radial zu der durch die Gelenkwelle 38 gebildeten Drehstelle des Niederhalters 30 am Kupplungsgehäuse 18 ausgerichtet. In der solchermaßen gebildeten Arretierungsposition 74 verläuft der Querriegel 66 senkrecht zur Schwenkrichtung 76 des Niederhalters 30 am Kupplungsgehäuse 18 und erstreckt sich von der einen zur anderen Wange 34, 36 des Kupplungsgehäuses 18, wobei eine Schwenkbewegung des Niederhalters 30 in Richtung der die Kupplungskugel 14 freigebenden Stellung 50 durch den Querriegel 66 vollständig blockiert ist. Der in Fig. 6 im Detail wiedergegebene Querriegel 66 ist aus Flach- bzw. Plattenmaterial einer geeigneten Stahllegierung hergestellt, sodass dieser eine ebene Gegenfläche zur Anlage des am Niederhalter 30 vorgesehenen flächigen Anschlagbereichs 72 bildet.

Entsprechend Fig. 2 ist der Querriegel 66 derart an dem Kupplungsgehäuse 18 angelenkt, dass sich dieser ausgehend von seiner Arretierungsposition 74 in Fig. 1 von Hand in eine die Arretierung des Niederhalters 30 lösende Position 78 verschwenken bzw. hochklappen lässt. Genauer gesagt nimmt eine schlitzförmige Ausnehmung 80, die sich beispielsgemäß an der linken Wange 34 befindet, einen Anlenkbereich 82 (siehe Fig. 6) des Querriegels 66 formschlüssig auf, wobei der Anlenkbereich 82 innerhalb der schlitzförmigen Ausnehmung 80 mittels eines sich durch eine Bohrung 84 hindurcherstreckenden (nicht gezeigten) Gelenkbolzens drehbar gelagert ist. Wie ferner in Fig. 2 zu erkennen ist, stehen die beiden Wangen 34, 36 auf einer dem Querriegel 66 abgewandten Seite über einen Brückenabschnitt 86 miteinander in Verbindung, wobei an dem Brückenabschnitt 86 zusätzlich eine den Querriegel 66 stützende Führungsfläche 88 ausgebildet ist.

Der Querriegel 66 weist an einem dem Anlenkbereich 82 gegenüberliegenden Freiende 90 einen Griffbereich 92 auf. Der Griffbereich 92 ist als über die angrenzende rechte Wange 36 des Kupplungsgehäuses 18 hinausragender Riegelabschnitt 94 ausgeformt. Zusätzlich ist an dem Querriegel 66 ein sich über den Anlenkbereich 82 entgegengesetzt zum Freiende 90 erstreckender ambossartiger Vorsprung 96 in Form eines weiteren Riegelabschnitts 98 vorgesehen. Durch Einwirken mittels eines Hammers oder eines anderen Schlagwerkzeugs auf den ambossartigen Vorsprung 96 lässt sich ein Öffnen des Querriegels 66 durch Herausschwenken aus seiner Arretierungsposition 74 unterstützen.

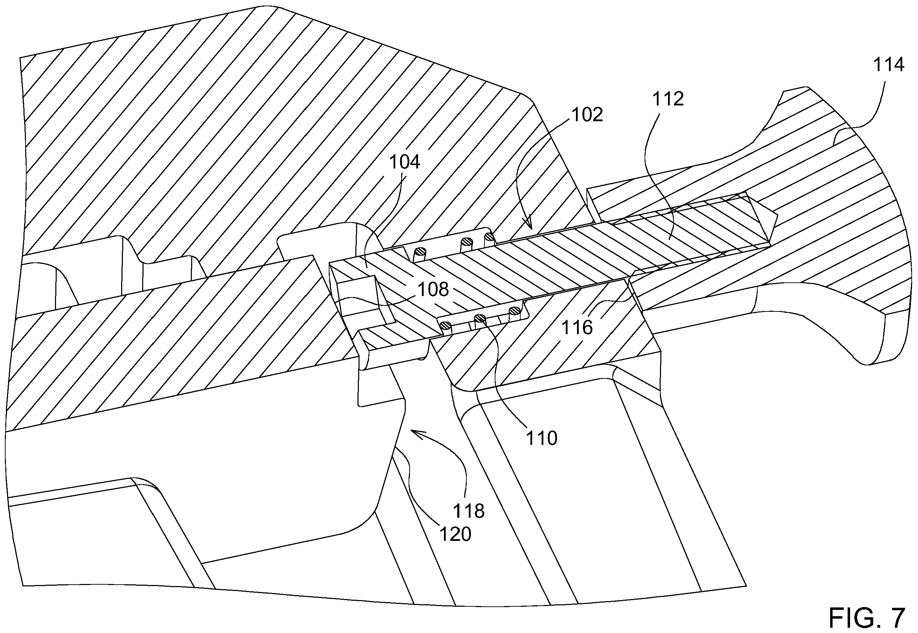

Um ein unbeabsichtigtes Lösen der Kupplungsverbindung zu unterbinden, ist der Querriegel 66 in seiner Arretierungsposition 74 mittels eines von Hand betätigbaren Sicherungsmechanismus 100 festlegbar. Der in Fig. 7 im Schnitt wiedergegebene Sicherungsmechanismus 100 weist einen federvorgespannten Sicherungsbolzen 102 auf, dessen freies Ende 104 in der Arretierungsposition 74 des Querriegels 66 in eine in diesem ausgebildete Ausnehmung 106 eingreift. Die Ausnehmung 106 verläuft stirnseitig im Bereich des Freiendes 90 des verschwenkbaren Querriegels 66 und weist die Gestalt eines an den Außendurchmesser des Sicherungsbolzens 102 angepassten Eingriffsschlitzes 108 auf. Der Sicherungsbolzen 102 ist mitsamt einer zum Aufbau der Federvorspannung vorgesehenen Druckfeder 110 in der an das Freiende 90 des Querriegels 66 angrenzenden rechten Wange 36 des Kupplungsgehäuses 18 gelagert, wobei sich ein Befestigungsende 112 des Sicherungsbolzens 102 durch die betreffende Wange 36 hindurcherstreckt und seinerseits einen Handknauf 114 trägt, der zugleich ein Gegenlager 116 zur Begrenzung einer Ausfederbewegung des federvorgespannten Sicherungsbolzens 102 bildet.

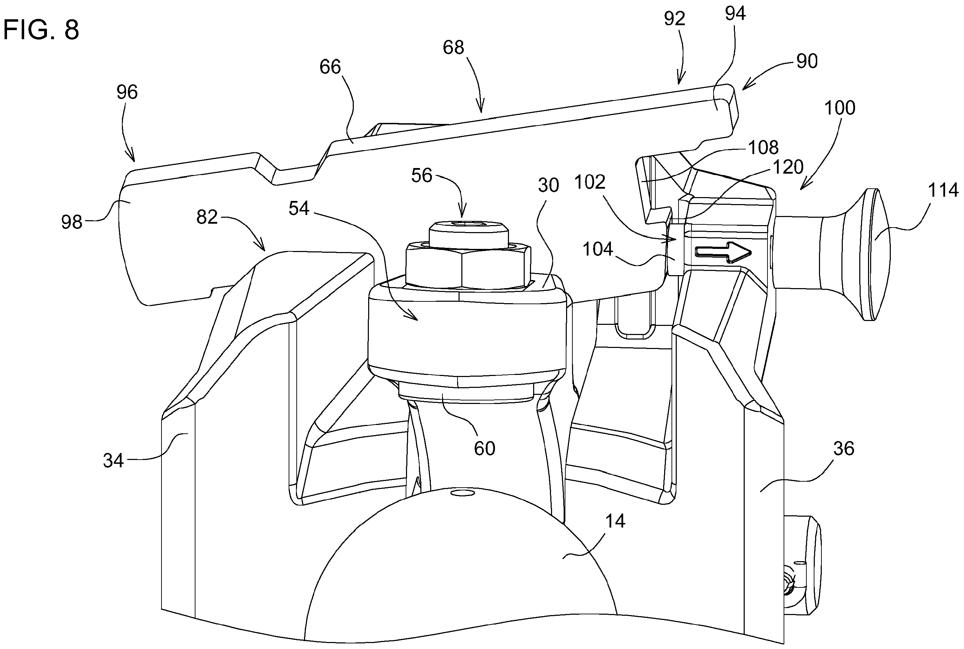

Entsprechend Fig. 8 ist die Ausnehmung 106 am Querriegel 66 entlang eines Eintrittsbereichs 118 derart konturiert, dass in Zusammenwirken mit dem freien Ende 104 des federvorgespannten Sicherungsbolzens 102 ein Schnappverschluss gebildet ist. Genauer gesagt weist der Eintrittsbereich 118 eine rampenförmige Kontur 120 auf, die den Sicherungsbolzen 102 beim Schließen des verschwenkbaren Querriegels 66 in Richtung seiner Arretierungsposition 74 entgegen der Federvorspannung wegdrängt, um bei Erreichen einer endgültigen Position, hier der Arretierungsposition 74, in den sich daran anschließenden Eingriffsschlitz 108 einzurasten.

Der am Querriegel 66 vorgesehene Eingriffsschlitz 108, der Anlenkbereich 82, die beiden Riegelabschnitte 94, 98 sowie die rampenförmige Kontur 120 werden bei Verwendung von aus einer geeigneten Stahllegierung bestehenden Flach- bzw. Plattenmaterial in einem Arbeitsgang durch Laserschneiden hergestellt.

## Patentansprüche

1. Kugelkupplungsanordnung für einen landwirtschaftlichen Traktor, umfassend eine Kupplungsbasis (12) mit einer daran angebrachten Kupplungskugel (14) zur Aufnahme einer dazu komplementären Kupplungspfanne (16) und mit einem an der Kupplungsbasis (12) angeordneten Kupplungsgehäuse (18), wobei an dem Kupplungsgehäuse (18) ein Niederhalter (30) derart angelenkt ist, dass dieser zwischen einer die Kupplungskugel (14) verriegelnden Stellung (62) und einer diese freigebenden Stellung (50) verschwenkbar ist, **dadurch gekennzeichnet, dass** an dem Kupplungsgehäuse (18) ein Verschlusselement (68) angebracht ist, das sich zur Arretierung des Niederhalters (30) in seiner verriegelnden Stellung (62) mit einem an einer Außenkontur (70) des Niederhalters (30) ausgebildeten flächigen Anschlagbereich (72) in Anlage bringen lässt.

2. Kugelkupplungsanordnung nach Anspruch 1, **dadurch gekennzeichnet, dass** es sich bei dem Verschlusselement (68) um einen in einer Arretierungsposition (74) senkrecht zur Schwenkrichtung (76) des Niederhalters (30) am Kupplungsgehäuse (18) verlaufenden Querriegel (66) handelt.

3. Kugelkupplungsanordnung nach Anspruch 2, **dadurch gekennzeichnet, dass** der Querriegel (66) derart an dem Kupplungsgehäuse (18) angelenkt ist, dass sich dieser von Hand in eine die Arretierung des Niederhalters (30) lösende Position (78) verschwenken lässt.

4. Kugelkupplungsanordnung nach Anspruch 2 oder 3, **dadurch gekennzeichnet, dass** der flächige Anschlagbereich (72) radial zu einer der Anlenkung des Niederhalters (30) am Kupplergehäuse (18) dienenden Drehstelle ausgerichtet ist.

5. Kugelkupplungsanordnung nach wenigstens einem der Ansprüche 2 bis 4, **dadurch gekennzeichnet, dass** der Querriegel (66) einen Anlenkbereich (82) zur drehbaren Lagerung am Kupplungsgehäuse (18) aufweist, wobei der Querriegel (66) an einem dem Anlenkbereich (82) gegenüberliegenden Freiende (90) einen Griffbereich (92) aufweist.

6. Kugelkupplungsanordnung nach Anspruch 5, **dadurch gekennzeichnet, dass** an dem Querriegel (66) ein sich über den Anlenkbereich (82) entgegengesetzt zum Freiende (90) erstreckender ambossartiger Vorsprung (96) vorgesehen ist.

7. Kugelkupplungsanordnung nach wenigstens einem der Ansprüche 2 bis 6, **dadurch gekennzeichnet, dass** der Querriegel (66) in der Arretierungsposition (74) mittels eines von Hand betätigbaren Sicherungsmechanismus (100) festlegbar ist.

8. Kugelkupplungsanordnung nach Anspruch 7, **dadurch gekennzeichnet, dass** der Sicherungsmechanismus (100) einen federvorgespannten Sicherungsbolzen (102) aufweist, dessen freies Ende (104) in der Arretierungsposition (74) des Querriegels (66) in eine in diesem ausgebildete Ausnehmung (106) eingreift.

9. Kugelkupplungsanordnung nach Anspruch 8, **dadurch gekennzeichnet, dass** die Ausnehmung (106) entlang eines Eintrittsbereichs (118) derart konturiert ist, dass in Zusammenwirken mit dem freien Ende (104) des federvorgespannten Sicherungsbolzens (102) ein Schnappverschluss gebildet ist.

10. Kugelkupplungsanordnung nach wenigstens einem der Ansprüche 1 bis 9, **dadurch gekennzeichnet, dass** der Niederhalter (30) mittels eines Federelements (48) in Richtung der die Kupplungskugel (14) freigebenden Stellung (50) vorgespannt ist.
